# EUROPEAN PATENT APPLICATION

(11) **EP 3 905 384 A1**
(43) Date of publication of application: **03.11.2021**
(21) Application number: 19904052.8
(22) Date of filing: 17.12.2019
(51) Int. Cl.: H01M 4/02, H01M 4/13, H01M 4/66, H01M 4/70

(54) **ELECTRODE PLATE AND SECONDARY BATTERY USING SAME**

(30) Priority: 27.12.2018 JP 2018244061
(71) Applicant: SANYO Electric Co., Ltd., Daito-shi Osaka 574-8534 (JP)
(72) Inventor: TAMURA, Kazuaki, Osaka-shi, Osaka 540-6207 (JP); MAGARI, Yoshifumi, Osaka-shi, Osaka 540-6207 (JP); AKO, Atsutoshi, Osaka-shi, Osaka 540-6207 (JP); NISHIDA, Akira, Osaka-shi, Osaka 540-6207 (JP); TSUKAMOTO, Kentaro, Osaka-shi, Osaka 540-6207 (JP); YAMADA, Tomoyuki, Osaka-shi, Osaka 540-6207 (JP)
(74) Representative: Vigand, Philippe
(86) International application number: PCT/JP2019/049494
(87) International publication number: WO 2020/137715

(57) **Abstract**

Provided are a highly reliable electrode plate and a secondary battery using the electrode plate. A positive electrode plate (4), which is for a secondary battery, has a positive electrode core body (4a) and a positive electrode active material layer (4b) formed on the positive electrode core body (4a). The positive electrode core body (4a) has, at an end thereof, a thick part (4x) having a thickness larger than that of the center area of the positive electrode core body (4a). The thick part (4x) includes a first projection that projects from one surface of the positive electrode core body (4a) in the thickness direction of the positive electrode core body (4a). The positive electrode core body (4a) is formed of an aluminum alloy which contains 0.5-2.0 mass% of Mn.

## Description

### TECHNICAL FIELD

The present invention relates to an electrode plate and a secondary battery using the same.

### BACKGROUND ART

For power sources for driving an electric vehicle (EV), a hybrid electric vehicle (HEV, PHEV), and the like, secondary batteries such as an alkali secondary battery and a non-aqueous electrolyte secondary battery have been used.

In each of the secondary batteries, a bottomed cylindrical exterior member having an opening and a sealing plate that seals the opening constitute a battery case. An electrode assembly composed of a positive electrode plate, a negative electrode plate, and a separator, together with an electrolyte, is housed in the battery case. A positive electrode terminal and a negative electrode terminal are attached to the sealing plate. The positive electrode terminal is electrically connected to the positive electrode plate via a positive electrode current collector, and the negative electrode terminal is electrically connected to the negative electrode plate via a negative electrode current collector.

As the secondary battery, a secondary battery comprising a flat-shaped wound electrode assembly obtained by winding a strip-shaped positive electrode plate having a plurality of positive electrode tabs and a strip-shaped negative electrode plate having a plurality of negative electrode tabs with a strip-shaped separator therebetween has been proposed (Patent Literature 1, described below).

A technique for cutting a positive electrode plate or a negative electrode plate using a continuous oscillation laser to form a curved portion having a larger thickness than a thickness of a core body (current collector foil) constituting the positive electrode plate or the negative electrode plate in a cut end portion of the core body has been proposed (Patent Literature 2, described below).

### CITATION LIST

### PATENT LITERATURE

PATENT LITERATURE 1: Japanese Unexamined Patent Application Publication No. 2016-115409
PATENT LITERATURE 2: Japanese Unexamined Patent Application Publication No. 2016-33912

### SUMMARY

It is an advantage of the present invention to provide a highly reliable electrode plate and a secondary battery using the same.

An electrode plate according to an aspect of the present invention is
an electrode plate having a core body and an active material layer formed on the core body, in which
the core body has a thick-walled part having a larger thickness than a thickness in a central region of the core body in an end portion of the core body,
the thick-walled part includes a protrusion protruding in a thickness direction of the core body from one surface of the core body, and
the core body is composed of an aluminum alloy containing 0.5 to 2.0 % by mass of Mn.

When an electrode original plate is cut by irradiation of an energy beam such as a laser, the core body is melted and solidified by irradiation of the energy beam. Accordingly, the melted core body is solidified with it being rounded due to surface tension. Thus, a thick-walled part having a larger thickness than that in a central portion of the core body occurs in an end portion of the core body in a cut end portion. The thick-walled part may be detached from the core body, which may cause a positive electrode plate and a negative electrode plate to be short-circuited. When the thick-walled part is large, the thick-walled part damages a separator, which may cause the positive electrode plate and the negative electrode plate to be short-circuited.

A configuration of the electrode plate according to an aspect of the present invention enables the thickness of the thick-walled part to be made relatively small even if the electrode original plate is cut by irradiation of an energy beam such as a laser. Therefore, it is possible to prevent the protrusion formed in the end portion of the core body from dropping out of the core body and to prevent the protrusion formed in the end portion of the core body from damaging the separator.

The core body is preferably composed of an aluminum alloy containing 1.0 to 1.5 % by mass of Mn.

The core body is preferably composed of an aluminum alloy containing 0.05 to 0.2 % by mass of Cu.

The aluminum alloy preferably contains 0.6 % or less by mass of Si, 0.7 % or less by mass of Fe, and 0.1 % or less by mass of Zn.

The thick-walled part preferably includes a melted and solidified part formed by melting and solidifying the core body.

The electrode plate preferably has a first end side on which a plurality of electrode tabs are formed, and
the end portion is preferably the first end side.

A secondary battery according to an aspect of the present invention comprises the electrode plate, and another electrode plate having a different polarity from that of the electrode plate.

According to the present invention, there can be provided a highly reliable electrode plate and a secondary battery using the same.

### BRIEF DESCRIPTION OF DRAWINGS

FIG. 1 is a perspective view of a secondary battery according to an embodiment.
FIG. 2 is a sectional view taken along a line II - II illustrated in FIG. 1.
FIG. 3(a) is a plan view of a positive electrode original plate.
FIG. 3(b) is a plan view of a positive electrode original plate after tab formation.
FIG. 3(c) is a plan view of a final positive electrode original plate.
FIG. 3(d) is a plan view of a positive electrode plate.
FIG. 4 is a sectional view illustrating a cross section taken along a line IV - IV illustrated in FIG. 3(d).
FIG. 5(a) is a plan view of a negative electrode original plate.
FIG. 5(b) is a plan view of a negative electrode original plate after tab formation.
FIG. 5(c) is a plan view of a final negative electrode original plate.
FIG. 5(d) is a plan view of a negative electrode plate.
FIG. 6 is a plan view of a wound electrode assembly according to the embodiment.
FIG. 7 is a diagram illustrating a state where a positive electrode tab group is connected to a second positive electrode current collector and a negative electrode tab group is connected to a second negative electrode current collector.
FIG. 8 is a diagram illustrating a surface on an electrode assembly side of a sealing plate to which a first positive electrode current collector and a first negative electrode current collector are attached.
FIG. 9 is a diagram illustrating a surface on the electrode assembly side of the sealing plate after the second positive electrode current collector is attached to the first positive electrode current collector and the second negative electrode current collector is attached to the first negative electrode current collector.

### DESCRIPTION OF EMBODIMENTS

A configuration of a rectangular secondary battery 20 as a secondary battery according to an embodiment will be described below. The present invention is not limited to the following embodiment.

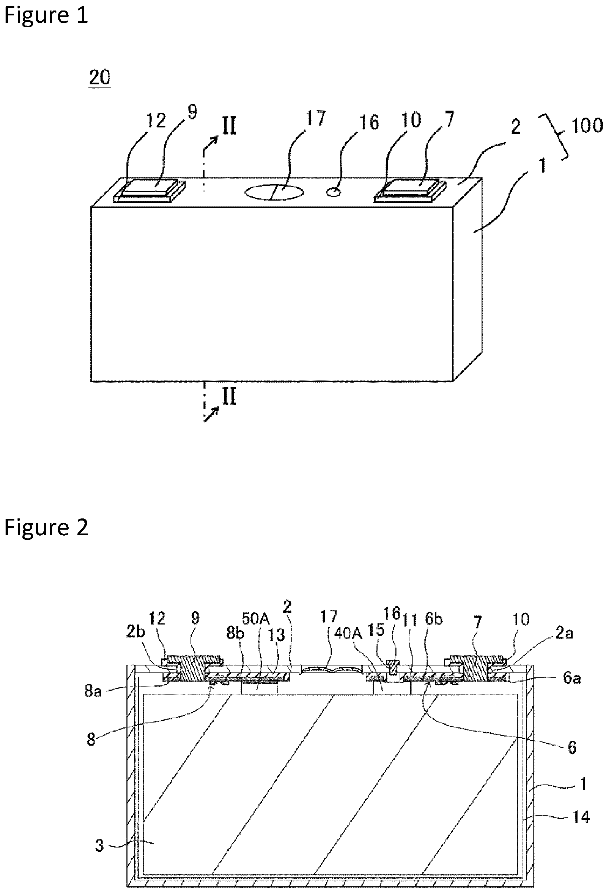

As illustrated in FIG. 1 and FIG. 2, the rectangular secondary battery 20 comprises a battery case 100 composed of a bottomed rectangular cylindrical-shaped rectangular exterior member 1 having an opening and a sealing plate 2 that seals the opening of the rectangular exterior member 1. The rectangular exterior member 1 and the sealing plate 2 are each preferably made of metal. A wound electrode assembly 3 including a positive electrode plate and a negative electrode plate, together with an electrolyte, is housed in the rectangular exterior member 1.

A positive electrode tab group 40A composed of a plurality of positive electrode tabs 40 and a negative electrode tab group 50A composed of a plurality of negative electrode tabs 50 are provided in an end portion on the sealing plate 2 side of the wound electrode assembly 3. The positive electrode tab group 40A is electrically connected to a positive electrode terminal 7 via a second positive electrode current collector 6b and a first positive electrode current collector 6a. The negative electrode tab group 50A is electrically connected to a negative electrode terminal 9 via a second negative electrode current collector 8b and a first negative electrode current collector 8a. The first positive electrode current collector 6a and the second positive electrode current collector 6b constitute a positive electrode current collector 6. The positive electrode current collector 6 may be one component. The first negative electrode current collector 8a and the second negative electrode current collector 8b constitute a negative electrode current collector 8. The negative electrode current collector 8 may be one component.

The first positive electrode current collector 6a, the second positive electrode current collector 6b, and the positive electrode terminal 7 are each preferably made of metal and more preferably made of aluminum or an aluminum alloy. An outer-side insulating member 10 made of resin is arranged between the positive electrode terminal 7 and the sealing plate 2. An inner-side insulating member 11 made of resin is arranged between the first positive electrode current collector 6a and the second positive electrode current collector 6b and the sealing plate 2.

The first negative electrode current collector 8a, the second negative electrode current collector 8b, and the negative electrode terminal 9 are each preferably made of metal and more preferably made of copper or a copper alloy. The negative electrode terminal 9 preferably has a portion made of aluminum or an aluminum alloy and a portion made of copper or a copper alloy. In this case, the portion made of copper or a copper alloy is preferably connected to the first negative electrode current collector 8a, and the portion made of aluminum or an aluminum alloy preferably protrudes more outwardly than the sealing plate 2. An outer-side insulating member 12 made of resin is arranged between the negative electrode terminal 9 and the sealing plate 2. An inner-side insulating member 13 made of resin is arranged between the first negative electrode current collector 8a and the second negative electrode current collector 8b and the sealing plate 2.

An electrode assembly holder 14 composed of a resin sheet made of resin is arranged between the wound electrode assembly 3 and the rectangular exterior member 1. The electrode assembly holder 14 is preferably shaped by bending an insulating sheet made of resin in a bag shape or a box shape. The sealing plate 2 is provided with an electrolyte injection hole 15, and the electrolyte injection hole 15 is sealed with a sealing member 16. The sealing plate 2 is provided with a gas discharge valve 17 that is broken when pressure in the battery case 100 reaches a predetermined value or more and discharges gas in the battery case 100 out of the battery case 100.

Then, details of a method of manufacturing the rectangular secondary battery 20 and each of components in the rectangular secondary battery 20 will be described.

### [Positive Electrode Plate]

First, a method of manufacturing a positive electrode plate will be described.

### [Production of Positive Electrode Active Material Layer Slurry]

A lithium-nickel-cobalt-manganese composite oxide as a positive electrode active material, polyvinylidene fluoride (PVdF) as a binder, a carbon material as a conductive agent, and N-methyl-2-pyrrolidone (NMP) as a dispersion medium are kneaded such that a mass ratio of the lithium-nickel-cobalt-manganese composite oxide, the PVdF, and the carbon material is 97.5 : 1 : 1.5, to produce a positive electrode active material layer slurry.

### [Production of Positive Electrode Protective Layer Slurry]

Alumina powder, a carbon material as a conductive agent, polyvinylidene fluoride (PVdF) as a binder, and N-methyl-2-pyrrolidone (NMP) as a dispersion medium are kneaded such that a mass ratio of the alumina powder, the carbon material, and the PVdF is 83 : 3 : 14, to produce a protective layer slurry.

### [Formation of Positive Electrode Active Material Layer and Positive Electrode Protective Layer]

The positive electrode active material layer slurry and the positive electrode protective layer slurry produced in the above-described method are each applied to both surfaces of an aluminum foil having a thickness of 15 µm as a positive electrode core body with a die coater. At this time, the positive electrode active material layer slurry is applied to a center in a width direction of the positive electrode core body. The positive electrode protective layer slurry is applied to both ends in a width direction of a region to which the positive electrode active material layer slurry is applied.

The positive electrode core body to which the positive electrode active material layer slurry and the positive electrode protective layer slurry are applied is dried, to remove the NMP included in each of the positive electrode active material layer slurry and the positive electrode protective layer slurry. As a result, a positive electrode active material layer and a protective layer are formed. Then, the positive electrode active material layer is compressed by being passed between paired press rollers, to obtain a positive electrode original plate 400.

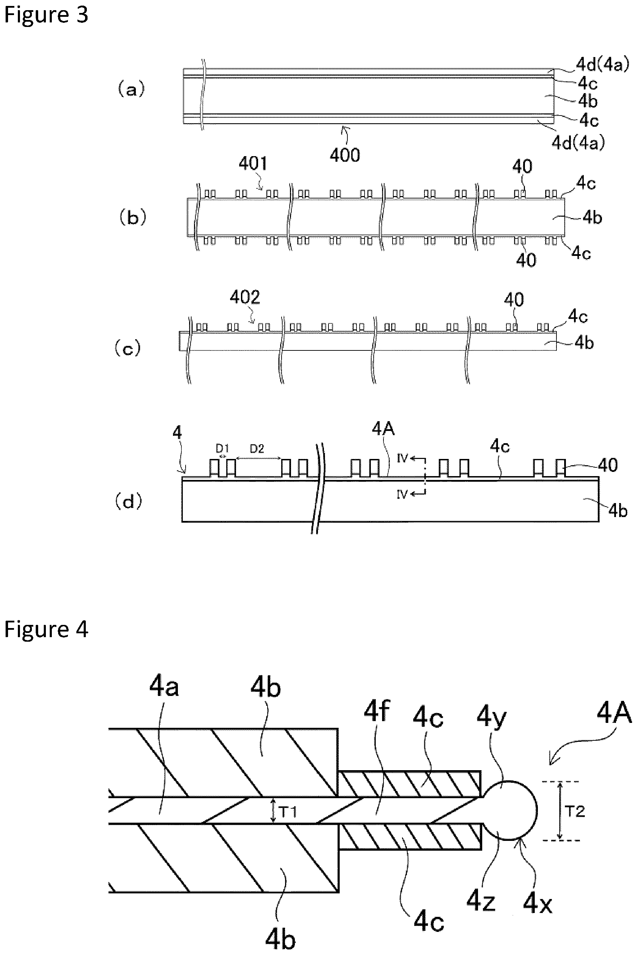

FIG. 3(a) is a plan view of the positive electrode original plate 400 produced in the above-described method. On both surfaces of a strip-shaped positive electrode core body 4a, positive electrode active material layers 4b are respectively formed in a longitudinal direction of the positive electrode core body 4a. Positive electrode protective layers 4c are respectively formed in both end portions in a width direction of a region where the positive electrode active material layers 4b are formed in the positive electrode core body 4a. Positive electrode core body exposure parts 4d are respectively formed in a longitudinal direction of the positive electrode original plate 400 in both end portions in a width direction of the positive electrode original plate 400. The thickness of the positive electrode active material layer 4b is preferably larger than the thickness of the positive electrode protective layer 4c.

FIG. 3(b) is a plan view of a positive electrode original plate 401 after tab formation. The positive electrode core body exposure part 4d in the positive electrode original plate 400 is cut into a predetermined shape, to produce the positive electrode original plate 401 after tab formation. The positive electrode original plate 400 can be cut by irradiation of an energy beam such as a laser, a metal mold, a cutter (cutting blade), or the like. In the positive electrode original plate 401 after tab formation, the plurality of positive electrode tabs 40 are formed in a longitudinal direction of the positive electrode original plate 401 after tab formation at both ends in a width direction of the positive electrode original plate 401 after tab formation. Each of the positive electrode tabs 40 is composed of the positive electrode core body exposure part 4d. As illustrated in FIG. 3(b), the positive electrode original plate 400 can be cut such that the positive electrode protective layer 4c remains in an end portion of the positive electrode original plate 401 after tab formation formed at a root of each of the positive electrode tabs 40 and between the adjacent positive electrode tabs 40. The positive electrode protective layer 4c is not an essential component, and can also be omitted. A portion where the positive electrode active material layer 4b is formed may be cut so that the positive electrode protective layer 4c does not remain in an end side of the positive electrode original plate 401 after tab formation formed between the adjacent positive electrode tabs 40. The positive electrode original plate 400 is preferably cut by irradiation of an energy beam to form the positive electrode tabs 40.

When the positive electrode original plate 400 is cut using a laser, an output of the laser is preferably 100 W to 1500 W, more preferably 550 W to 1000 W, and still more preferably 600 W to 1000 W. A scanning speed of the laser is preferably 100 mm/s to 5000 mm/s. However, the present invention is not limited to this. A continuous oscillation (CW) laser may be used, or a pulse laser may be used.

FIG. 3(c) is a plan view of a final positive electrode original plate 402. In the longitudinal direction of the positive electrode original plate 401 after tab formation, the positive electrode original plate 401 after tab formation is cut in a central portion in the width direction. As a result, the final positive electrode original plate 402 the size in the width direction of which is the size of a positive electrode plate 4 is obtained. That is, the final positive electrode original plate 402 remains not cut to the length of the positive electrode plate 4 in a length direction. In the longitudinal direction of the positive electrode original plate 401 after tab formation, the positive electrode original plate 401 after tab formation is preferably cut using a metal mold, a cutter (cutting blade), or the like when cut in the central portion in the width direction.

FIG. 3(d) is a plan view of the positive electrode plate 4. The final positive electrode original plate 402 is cut to a predetermined length, to obtain the positive electrode plate 4. To further improve productivity, the final positive electrode original plate 402 is preferably cut in a process for producing a wound electrode assembly, described below. That is, a portion to be a winding-end end portion is preferably cut while or after the wound electrode assembly is wound. The final positive electrode original plate 402 is preferably cut using a metal mold, a cutter (cutting blade), or the like when cut to the predetermined length.

Three end sides other than a first end side 4A on which the positive electrode tabs 40 are formed (end sides extending in a longitudinal direction of the positive electrode plate 4 and on the opposite side to the first end side 4A and two end sides extending in a transverse direction of the positive electrode plate 4) in the positive electrode plate 4 are preferably cut in a method other than irradiation of an energy beam, for example, a metal mold or a cutter (cutting blade). The positive electrode plate 4 can be adapted such that a thick-walled part 4x is not formed in end portions of the positive electrode core body 4a respectively positioned on the three end sides other than the first end side 4A on which the positive electrode tabs 40 are formed.

To obtain a higher output secondary battery, in the wound electrode assembly 3, the positive electrode tabs 40 are preferably provided for each layer of the positive electrode plate 4. That is, the number of positive electrode plate 4 to be laminated and the number of positive electrode tabs 40 to be laminated are preferably the same or substantially the same. Therefore, as illustrated in FIG. 3(d), there exist a portion where the positive electrode tabs 40 are arranged at a short distance (D1) and a portion where the positive electrode tabs 40 are arranged at a long distance (D2) in the positive electrode plate 4. In the wound electrode assembly 3, its diameter increases toward a winding outer side (outer peripheral side) from a winding center. Therefore, when the positive electrode tabs 40 are laminated, the distance D1 and the distance D2 are preferably set to gradually increase from a winding-start end portion to a winding-end end portion of the positive electrode plate 4 such that respective positions of the positive electrode tabs 40 are aligned with one another. The same applies to the negative electrode tabs 50, described below.

FIG. 4 is a sectional view taken along a line IV - IV illustrated in FIG. 3(d) and is a sectional view in the vicinity of the first end side 4A, on which the positive electrode tabs 40 are provided, in the positive electrode plate 4. As illustrated in FIG. 4, the vicinity of the first end side 4A of the positive electrode plate 4 has an active material layer non-formation region 4f, where the positive electrode active material layers 4b are not formed, in the positive electrode core body 4a. The positive electrode protective layers 4c are respectively formed in portions, adjacent to the positive electrode active material layers 4b, in the active material layer non-formation region 4f. A first protrusion 4y protruding in a thickness direction (in an upward direction in FIG. 4) of the positive electrode core body 4a from one surface (an upper surface in FIG. 4) of the positive electrode core body 4a is formed in an end portion of the active material layer non-formation region 4f. A second protrusion 4z protruding in a thickness direction (in a downward direction in FIG. 4) of the positive electrode core body 4a from the other surface (a lower surface in FIG. 4) of the positive electrode core body 4a is formed in an end portion of the active material layer non-formation region 4f. The first protrusion 4y and the second protrusion 4z are each a portion where the positive electrode core body 4a is melted and solidified at the time of laser cutting.

An end portion of the positive electrode core body 4a on the first end side 4A of the positive electrode plate 4 has the thick-walled part 4x. A thickness T2 of the thick-walled part 4x is larger than a thickness T1 in a central portion of the positive electrode core body 4a. T2/T1 is preferably 2.0 or less, and is more preferably 1.5 or less.

The positive electrode plate 4 can be adapted such that the thick-walled part 4x is not formed in the end portions of the positive electrode core body 4a respectively positioned on the three end sides other than the first end side 4A on which the positive electrode tabs 40 are formed (the end side extending in the longitudinal direction of the positive electrode plate 4 and on the opposite side to the first end side 4A and the two end sides extending in the transverse direction of the positive electrode plate 4).

The thick-walled part 4x includes the first protrusion 4y and the second protrusion 4z. The second protrusion 4z is not an essential component. The second protrusion 4z need not be formed. The protrusion height of the first protrusion 4y and the protrusion height of the second protrusion 4z may differ from each other.

### [Negative Electrode Plate]

Then, a method of manufacturing a negative electrode plate will be described.

### [Production of Negative Electrode Active Material Layer Slurry]

Graphite as a negative electrode active material, styrene-butadiene rubber (SBR) and carboxymethyl cellulose (CMC) as a binder, and water as a dispersion medium are kneaded such that a mass ratio of the graphite, the SBR, and the CMC is 98 : 1 : 1, to produce a negative electrode active material layer slurry.

### [Formation of Negative Electrode Active Material Layer]

The negative electrode active material layer slurry produced in the above-described method is applied to both surfaces of a copper foil having a thickness of 8 µm as a negative electrode core body with a die coater.

The negative electrode core body to which the negative electrode active material layer slurry is applied is dried, to remove the water included in the negative electrode active material layer slurry. As a result, the negative electrode active material layer is formed. Then, the negative electrode active material layer is compressed by being passed between paired press rollers, to obtain a negative electrode original plate 500.

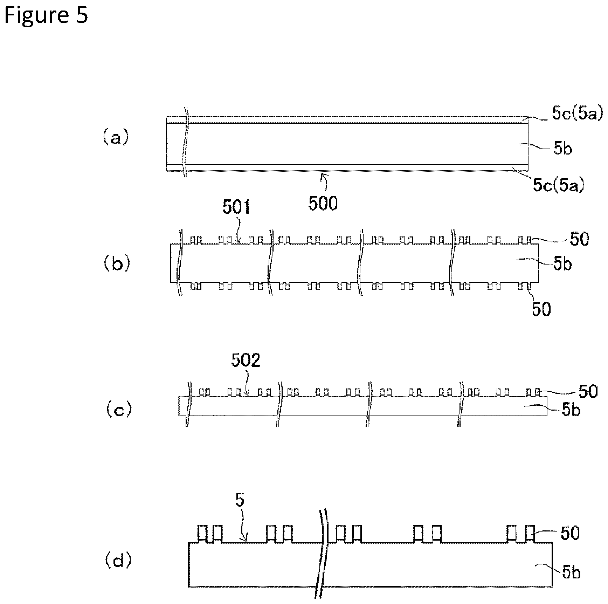

FIG. 5(a) is a plan view of the negative electrode original plate 500 produced in the above-described method. On both surfaces of a strip-shaped negative electrode core body 5a, negative electrode active material layers 5b are respectively formed in a longitudinal direction of the negative electrode core body 5a. Negative electrode core body exposure parts 5c are respectively formed in a longitudinal direction of the negative electrode original plate 500 in both end portions in a width direction of the negative electrode original plate 500.

FIG. 5(b) is a plan view of a negative electrode original plate 501 after tab formation. The negative electrode core body exposure part 5c in the negative electrode original plate 501 after tab formation is cut to a predetermined shape, to produce the negative electrode original plate 501 after tab formation. The negative electrode original plate 500 can be cut by irradiation of an energy beam such as a laser, a metal mold, a cutter (cutting blade), or the like. In the negative electrode original plate 501 after tab formation, the plurality of negative electrode tabs 50 are formed in a longitudinal direction of the negative electrode original plate 501 after tab formation at both ends in a width direction of the negative electrode original plate 501 after tab formation. Each of the negative electrode tabs 50 is composed of the negative electrode core body exposure part 5c. The negative electrode original plate 500 is preferably cut by irradiation of an energy beam to form the negative electrode tabs 50.

FIG. 5(c) is a plan view of a final negative electrode original plate 502. In the longitudinal direction of the negative electrode original plate 501 after tab formation, the negative electrode original plate 501 after tab formation is cut in a central portion in the width direction. As a result, the final negative electrode original plate 502 the size in the width direction of which is the size of a negative electrode plate 5 is obtained. That is, the final negative electrode original plate 502 remains not cut to the length of the negative electrode plate 5 in a length direction. In the longitudinal direction of the negative electrode original plate 501 after tab formation, the negative electrode original plate 501 after tab formation is preferably cut using a metal mold, a cutter (cutting blade), or the like when cut in the central portion in the width direction.

FIG. 5(d) is a plan view of the negative electrode plate 5. The final negative electrode original plate 502 is cut to a predetermined length, to obtain the negative electrode plate 5. To further improve productivity, the final negative electrode original plate 502 is preferably cut in a process for producing a wound electrode assembly, described below. That is, a portion to be a winding-end end portion is preferably cut while or after the wound electrode assembly is wound. The final negative electrode original plate 502 is preferably cut using a metal mold, a cutter (cutting blade), or the like when cut to the predetermined length.

### [Production of Wound Electrode Assembly]

The positive electrode plate 4 and the negative electrode plate 5 produced in the above-described methods are each wound with a strip-shaped separator 70 made of polyolefin therebetween, to manufacture the flat-shaped wound electrode assembly 3. As described above, one end of the final positive electrode original plate 402 and one end of the final negative electrode original plate 502 are fed to a winding device, and the final positive electrode original plate 402 and the final negative electrode original plate 502 are preferably respectively cut at predetermined positions while or after the winding.

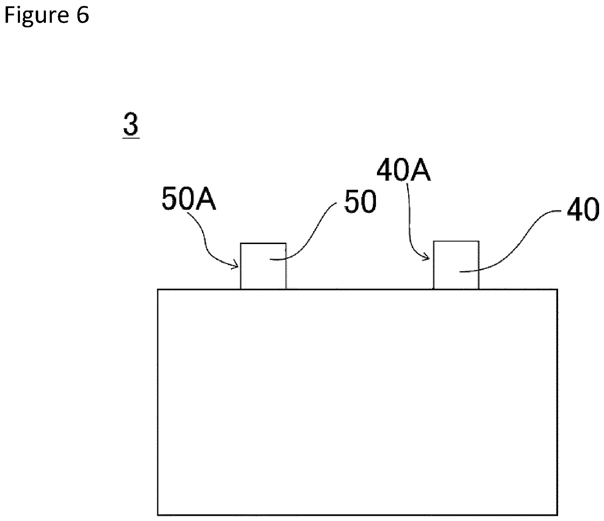

FIG. 6 is a plan view of the wound electrode assembly 3. In the wound electrode assembly 3, the positive electrode tab group 40A composed of the plurality of positive electrode tabs 40 and the negative electrode tab group 50A composed of the plurality of negative electrode tabs 50 are provided in one end portion in a direction in which a winding axis extends.

In the wound electrode assembly 3, when the number of positive electrode plates 4 to be laminated is set to N1 (layers), the number of positive electrode tabs 40 to be laminated is preferably 0.8 × N1 or more and more preferably 0.9 × N1 or more.

In the wound electrode assembly 3, when the number of negative electrode plates 5 to be laminated is set to N2 (layers), the number of negative electrode tabs 50 to be laminated is preferably 0.8 × N2 or more and more preferably 0.9 × N2 or more.

### [Connection between Current Collector and Tab]

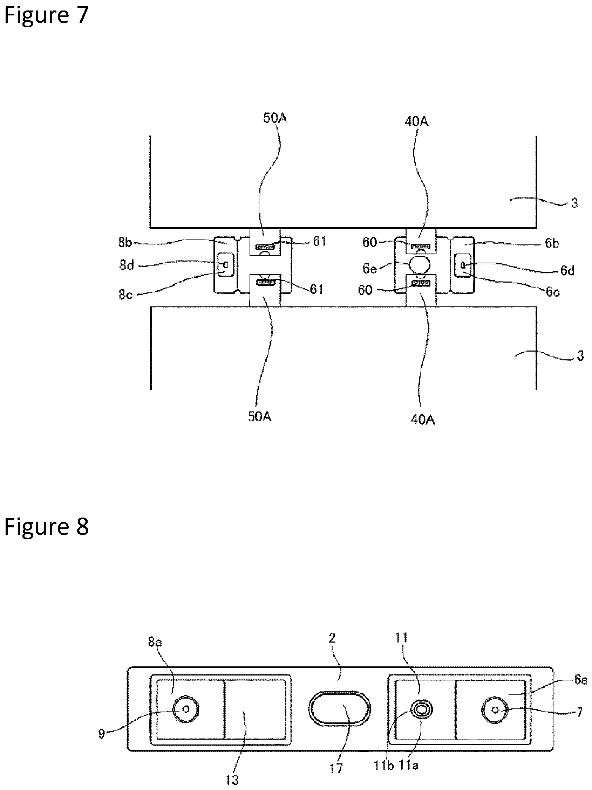

As illustrated in FIG. 7, respective positive electrode tab groups 40A in two wound electrode assemblies 3 are connected to the second positive electrode current collector 6b, and respective negative electrode tab groups 50A in two wound electrode assemblies 3 are connected to the second negative electrode current collector 8b. The positive electrode tab groups 40A are bonded to the second positive electrode current collector 6b, to respectively form bonding parts 60. The negative electrode tab groups 50A are bonded to the second negative electrode current collector 8b, to respectively form bonding parts 61. As a bonding method, ultrasonic welding (ultrasonic bonding), resistance welding, laser welding, or the like can be used.

A thin-walled part 6c is formed in the second positive electrode current collector 6b, and a current collector opening 6d is formed in the thin-walled part 6c. In the thin-walled part 6c, the second positive electrode current collector 6b is bonded to the first positive electrode current collector 6a. In the second positive electrode current collector 6b, a current collector through hole 6e is formed at a position opposing the electrolyte injection hole 15 in the sealing plate 2. A thin-walled part 8c is formed in the second negative electrode current collector 8b, and a current collector opening 8d is formed in the thin-walled part 8c. In the thin-walled part 8c, the second negative electrode current collector 8b is bonded to the first negative electrode current collector 8a.

### [Attachment of Each Component to Sealing Plate]

FIG. 8 is a diagram illustrating a surface, on the inner side of the battery, of the sealing plate 2 to which each of components is attached. Each of the components is attached to the sealing plate 2 in the following manner.

The outer-side insulating member 10 is arranged on the outer surface side of the battery around a positive electrode terminal insertion hole 2a of the sealing plate 2. The inner-side insulating member 11 and the first positive electrode current collector 6a are arranged on the inner surface side of the battery around the positive electrode terminal insertion hole 2a of the sealing plate 2. The positive electrode terminal 7 is inserted into a through hole of the outer-side insulating member 10, the positive electrode terminal insertion hole 2a of the sealing plate 2, a through hole of the inner-side insulating member 11, and a through hole of the first positive electrode current collector 6a from the outer side of the battery, to caulk a distal end of the positive electrode terminal 7 onto the first positive electrode current collector 6a. As a result, the positive electrode terminal 7 and the first positive electrode current collector 6a are fixed to the sealing plate 2. A portion caulked in the positive electrode terminal 7 and the first positive electrode current collector 6a are preferably welded to each other.

The outer-side insulating member 12 is arranged on the outer surface side of the battery around a negative electrode terminal insertion hole 2b of the sealing plate 2. The inner-side insulating member 13 and the first negative electrode current collector 8a are arranged on the inner surface side of the battery around the negative electrode terminal insertion hole 2b of the sealing plate 2. The negative electrode terminal 9 is inserted into a through hole of the outer-side insulating member 12, the negative electrode terminal insertion hole 2b of the sealing plate 2, a through hole of the inner-side insulating member 13, and a through hole of the first negative electrode current collector 8a from the outer side of the battery, to caulk a distal end of the negative electrode terminal 9 onto the first negative electrode current collector 8a. As a result, the negative electrode terminal 9 and the first negative electrode current collector 8a are fixed to the sealing plate 2. A portion caulked in the negative electrode terminal 9 and the first negative electrode current collector 8a are preferably welded to each other.

A portion, opposing the electrolyte injection hole 15 provided in the sealing plate 2, in the inner-side insulating member 11 is provided with an injection opening 11a. An edge portion of the injection opening 11a is provided with a cylindrical part 11b.

### [Connection between First Current Collector and Second Current Collector]

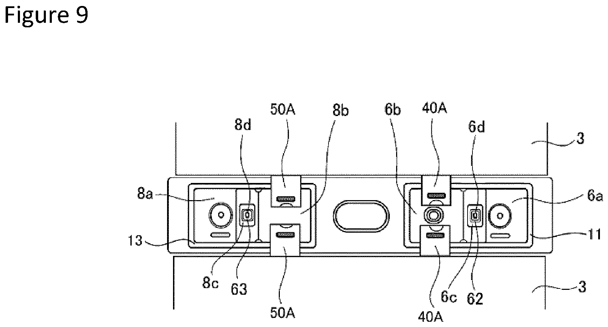

FIG. 9 is a diagram illustrating a surface, on the inner side of the battery, of the sealing plate 2 after the second positive electrode current collector 6b is attached to the first positive electrode current collector 6a and the second negative electrode current collector 8b is attached to the first negative electrode current collector 8a.

The second positive electrode current collector 6b to which the positive electrode tab groups 40A are connected is arranged on the inner-side insulating member 11 such that its part overlaps the first positive electrode current collector 6a. The thin-walled part 6c is irradiated with a laser, to bond the second positive electrode current collector 6b and the first positive electrode current collector 6a to each other. As a result, a bonding part 62 is formed. The second negative electrode current collector 8b to which the negative electrode tab groups 50A are connected is arranged on the inner-side insulating member 13 such that its part overlaps the first negative electrode current collector 8a. The thin-walled part 8c is irradiated with a laser, to bond the second negative electrode current collector 8b and the first negative electrode current collector 8a to each other. As a result, a bonding part 63 is formed.

### [Production of Secondary Battery]

The two positive electrode tab groups 40A and the two negative electrode tab groups 50A are curved such that an upper surface of one of the wound electrode assemblies 3 and an upper surface of the other wound electrode assembly 3 in FIG. 11 contact each other directly or via another member. As a result, the two wound electrode assemblies 3 are integrated. The two wound electrode assemblies 3 are arranged in the electrode assembly holder 14 composed of the insulating sheet shaped in a box shape or a bag shape.

The one positive electrode tab group 40A and the other positive electrode tab group 40A enter a state where they are respectively curved in different directions. The one negative electrode tab group 50A and the other negative electrode tab group 50A enter a state where they are respectively curved in different directions.

The two wound electrode assemblies 3 wrapped by the electrode assembly holder 14 are inserted into the rectangular exterior member 1. The sealing plate 2 and the rectangular exterior member 1 are welded to each other, and the opening of the rectangular exterior member 1 is sealed with the sealing plate 2. An electrolyte is injected into the rectangular exterior member 1 via the electrolyte injection hole 15 provided in the sealing plate 2. Then, the electrolyte injection hole 15 is sealed with the sealing member 16 such as a blind rivet. As a result, the rectangular secondary battery 20 is completed.

Positive electrode plates respectively associated with samples 1 to 4 were produced in the following method.

### [Sample 1]

A positive electrode original plate 400 was produced in the above-described method using an aluminum alloy foil having a thickness of 15 µm composed of an aluminum 1085 material (A1085) in the Japanese Industrial Standards JIS as a positive electrode core body 4a.

The positive electrode original plate 400 associated with a sample 1 was cut using a continuous oscillation laser, to produce a positive electrode original plate 401 after tab formation. Conditions of the laser were an output of 600W and a scanning speed of 4000 mm/s.

Then, the positive electrode original plate 401 after tab formation was cut to a predetermined size using a cutter, to obtain a positive electrode plate in the sample 1.

### [Sample 2]

A positive electrode original plate 400 was produced in the above-described method using an aluminum alloy foil having a thickness of 15 µm composed of an aluminum 3003 material (A3003) in the Japanese Industrial Standards JIS as a positive electrode core body 4a.

The positive electrode original plate 400 associated with the sample 1 was cut using a continuous oscillation laser, to produce a positive electrode original plate 401 after tab formation. Conditions of the laser were an output of 600W and a scanning speed of 4000 mm/s.

Then, the positive electrode original plate 401 after tab formation was cut to a predetermined size using a cutter, to obtain a positive electrode plate in a sample 2.

### [Sample 3]

A positive electrode original plate 400 was produced in the above-described method using an aluminum alloy foil having a thickness of 15 µm composed of an aluminum 1085 material (A1085) in the Japanese Industrial Standards JIS as a positive electrode core body 4a.

The positive electrode original plate 400 associated with the sample 1 was cut using a continuous oscillation laser, to produce a positive electrode original plate 401 after tab formation. Conditions of the laser were an output of 900W and a scanning speed of 4000 mm/s.

Then, the positive electrode original plate 401 after tab formation was cut to a predetermined size using a cutter, to obtain a positive electrode plate in a sample 3.

### [Sample 4]

A positive electrode original plate 400 was produced in the above-described method using an aluminum alloy foil having a thickness of 15 µm composed of an aluminum 3003 material (A3003) in the Japanese Industrial Standards JIS as a positive electrode core body 4a.

The positive electrode original plate 400 associated with the sample 1 was cut using a continuous oscillation laser, to produce a positive electrode original plate 401 after tab formation. Conditions of the laser were an output of 900W and a scanning speed of 4000 mm/s.

Then, the positive electrode original plate 401 after tab formation was cut to a predetermined size using a cutter, to obtain a positive electrode plate in a sample 4.

For the respective positive electrode plates 4 in the samples 1 to 4, a cross section of a portion where the positive electrode tabs 40 are not formed on the first end side 4A was observed, to measure a thickness T2 (µm) of a thick-walled part 4x. T2/T1 obtained when the thickness of a central portion of the positive electrode core body 4a (a portion having positive electrode active material layers 4b formed on both its surfaces in the positive electrode core body 4a) is set to T1 (µm) is illustrated in Table 1.

**[Table 1]**

| | Material of positive electrode core bodv | Amount of Mn in positive electrode core body (% bv mass) | Laser output (W) | T2/T1 |
|---|---|---|---|---|
| Sample 1 | A1085 | 0.02 or less | 600 | 2.04 |
| Sample 2 | A3003 | 1.0 to 1.5 | 600 | 1.94 |
| Sample 3 | A1085 | 0.02 or less | 900 | 2.12 |
| Sample 4 | A3003 | 1.0 to 1.5 | 900 | 1.99 |

Table 1 indicates that the thickness of the thick-walled part 4x formed in an end portion of the positive electrode core body 4a can be reduced by using an aluminum alloy foil containing 0.5 to 2.0 % by mass of Mn as the positive electrode core body 4a. The reason is considered that the thick-walled part 4x can be prevented from increasing because the positive electrode core body 4a is not easily melted at the time of laser cutting and the melted positive electrode core body 4a is not easily rounded by using the aluminum alloy foil containing 0.5 to 2.0 % by mass of Mn as the positive electrode core body 4a.

An aluminum alloy used as a core body preferably contains 0.05 to 0.2 % by mass of Cu. The aluminum alloy used as a core body preferably contains 0.6 % or less by mass of Si, 0.7 % or less by mass of Fe, and 0.1 % or less by mass of Zn.

### < Others >

Although an example in which the aluminum alloy is used as the positive electrode core body is illustrated in the above-described embodiment, a negative electrode core body may be made of aluminum alloy.

Although an example in which the positive electrode plate is provided with the positive electrode protective layer is illustrated in the above-described embodiment, the positive electrode protective layer is not an essential component. The positive electrode protective layer need not be provided. The positive electrode protective layer can be a resin layer. Alternatively, the positive electrode protective layer can also be a layer including ceramic particles and a binder. The positive electrode protective layer may include a carbon material. The positive electrode protective layer is preferably a layer having lower electric conductivity than that of the positive electrode active material layer.

Although an example in which the two wound electrode assemblies are arranged in the battery case has been illustrated in the above-described embodiment, the number of wound electrode assemblies may be one, or may be three or more. An electrode assembly may be a laminated-type electrode assembly including a plurality of positive electrode plates and a plurality of negative electrode plates.

Although an example in which each of the positive electrode current collector and the negative electrode current collector is composed of two components has been illustrated in the above-described embodiment, each of the positive electrode current collector and the negative electrode current collector may be composed of one component. If each of the positive electrode current collector and the negative electrode current collector is composed of one component, the positive electrode current collector and the negative electrode current collector are preferably respectively connected to the positive electrode terminal and the negative electrode terminal attached to the sealing plate after the positive electrode tab group and the negative electrode tab group are respectively connected to the positive electrode current collector and the negative electrode current collector.

Known materials can be respectively used for a positive electrode plate, a negative electrode plate, a separator, an electrolyte, and the like.

### REFERENCE SIGNS LIST

- 20: Rectangular secondary battery
- 1: Rectangular exterior member
- 2: Sealing plate
- 2a: Positive electrode terminal insertion hole
- 2b: Negative electrode terminal insertion hole
- 100: Battery case
- 3: Wound electrode assembly
- 4: Positive electrode plate
- 4A: First end side
- 4a: Positive electrode core body
- 4b: Positive electrode active material layer
- 4c: Positive electrode protective layer
- 4d: Positive electrode core body exposure part
- 4f: Active material layer non-formation region
- 4x: Thick-walled part
- 4y: First protrusion
- 4z: Second protrusion
- 40: Positive electrode tab
- 40A: Positive electrode tab group
- 400: Positive electrode original plate
- 401: Positive electrode original plate after tab formation
- 402: Final positive electrode original plate
- 5: Negative electrode plate
- 5a: Negative electrode core body
- 5b: Negative electrode active material layer
- 5c: Negative electrode core body exposure part
- 50: Negative electrode tab
- 50A: Negative electrode tab group
- 500: Negative electrode original plate
- 501: Negative electrode original plate after tab formation
- 502: Final negative electrode original plate
- 6: Positive electrode current collector
- 6a: First positive electrode current collector
- 6b: Second positive electrode current collector
- 6c: Thin-walled part
- 6d: Current collector opening
- 6e: Current collector through hole
- 7: Positive electrode terminal
- 8: Negative electrode current collector
- 8a: First negative electrode current collector
- 8b: Second negative electrode current collector
- 8c: Thin-walled part
- 8d: Current collector opening
- 9: Negative electrode terminal
- 10: Outer-side insulating member
- 11: Inner-side insulating member
- 11a: Injection opening
- 11b: Cylindrical part
- 12: Outer-side insulating member
- 13: Inner-side insulating member
- 14: Electrode assembly holder
- 15: Electrolyte injection hole
- 16: Sealing member
- 17: Gas discharge valve
- 60, 61, 62, 63: Bonding part

## Claims

1. An electrode plate having a core body and an active material layer formed on the core body, wherein
the core body has a thick-walled part having a larger thickness than a thickness in a central region of the core body in an end portion of the core body,
the thick-walled part includes a protrusion protruding in a thickness direction of the core body from one surface of the core body, and
the core body is composed of an aluminum alloy containing 0.5 to 2.0 % by mass of Mn.

2. The electrode plate according to claim 1, wherein the core body is composed of an aluminum alloy containing 0.05 to 0.2 % by mass of Cu.

3. The electrode plate according to claim 2, wherein the aluminum alloy contains 0.6 % or less by mass of Si, 0.7 % or less by mass of Fe, and 0.1 % or less by mass of Zn.

4. The electrode plate according to any one of claims 1 to 3, wherein the thick-walled part includes a melted and solidified part formed by melting and solidifying the core body.

5. The electrode plate according to any one of claims 1 to 4, wherein
the electrode plate has a first end side on which a plurality of electrode tabs are formed, and
the end portion is the first end side.

6. A secondary battery comprising: the electrode plate according to any one of claims 1 to 5; and
another electrode plate having a different polarity from that of the electrode plate.
